Europäisches Patentamt

European Patent Office

Office européen des brevets

(19)

(11) Veröffentlichungsnummer: **0 207 064**
**A2**

(12) **EUROPÄISCHE PATENTANMELDUNG**

(21) Anmeldenummer: 86890175.2

(22) Anmeldetag: 12.06.86

(51) Int. Cl.⁴: **B 29 C 47/90**
// B29L31:10

(30) Priorität: **13.06.85 AT 1770/85**

(43) Veröffentlichungstag der Anmeldung: **30.12.86**
**Patentblatt 86/52**

(84) Benannte Vertragsstaaten: **AT BE CH DE FR GB IT LI LU NL SE**

(71) Anmelder: **SCHAUMSTOFFWERK GREINER GESELLSCHAFT M.B.H., Greinerstrasse 70, A-4550 Kremsmünster Oberösterreich (AT)**

(72) Erfinder: **Pürstinger, Franz, Brunlehnerstrasse 11, A-4540 Bad Hall Oberösterreich (AT)**
Erfinder: **Topf, Siegfried, Waldmüllerweg 24, A-4050 Traun Oberösterreich (AT)**

(74) Vertreter: **Krause, Ernst, Dipl.-Ing. et al, Dipl.- Ing. Krause, Ernst Dipl. Ing. Casati, Wilhelm Patentanwälte Amerlingstrasse 8, A-1061 Wien (AT)**

(54) **Kalibriereinrichtung für Strangpressgut aus Kunststoff.**

(57) Diese Erfindung betrifft eine Kalibriereinrichtung für insbesondere plattenartiges Strangpressgut, wie Wandelemente, aus Kunststoff, mit einem Oberteil (5) und einem damit verbindbaren Unterteil (2) und einem dazwischen ausgebildeten Durchgangsspalt für das Strangpressgut, wobei der Ober- und Unterteil (5, 2) an einer Seite durch ein Drehlager aneinandergelenkt sind. Zur Ermöglichung eines raschen und einfachen Schliessens bzw. Öffnens dieser Einrichtung ist vorgesehen, dass zur Verriegelung von Ober- und Unterteil (5, 2) ein an einem dieser Teile drehbar gelagertes Schwenkstück (8) vorgesehen ist. Weiterhin ist bei einer Kalibriereinrichtung, die mit einer Kühleinrichtung durch ein strömendes Medium, z.B. Wasser, versehen ist, zur weiteren Verbesserung der Kühlung vorgesehen, dass im Ober- oder bzw. Unterteil (5, 2) ein schlangenlinienförmiger, quer zur Strangpressrichtung verlaufender Strömungsweg für das Medium vorgesehen ist. Diese beiden Massnahmen können unabhängig voneinander oder gemeinsam vorgesehen werden.

0207064

## Kalibriereinrichtung für Strangpreßgut aus Kunststoff

Die Erfindung bezieht sich auf eine Kalibriereinrichtung für insbesondere plattenartiges Strangpreßgut, wie Wandelemente aus Kunststoff, mit einem Oberteil und einem damit verbindbaren Unterteil und einem dazwischen ausgebildeten Durchgangsspalt für das Strangpreßgut, wobei der Ober- und Unterteil an einer Seite durch ein Drehlager aneinander gelenkt sind.

Bisher bekannte Einrichtungen wiesen einen Unterteil auf, auf den der Oberteil aufgesetzt und nach Zentrierung verschraubt bzw. verstiftelt wurde. Das Öffnen und Schließen der Einrichtung ist somit zeit- und arbeitsaufwendig, wobei sich zusätzlich die Gefahr eines Einklemmens des auszupressenden Stranggutes und bzw. oder dessen mangelnde Maßhaltigkeit ergibt. An diesem Übelstand ändert sich nichts Wesentliches, wenn Ober- und Unterteil durch ein Drehlager aneinander gelenkt sind.

Bekannte Einrichtungen werden ferner meist mit Wasser gekühlt; dieses kann in einem um das Kalibrierrohr herum angeordneten Wassermantel umlaufen, wobei es in diesem, allenfalls turbulent, in der Strangpreßrichtung strömt (AT-PS 322 824). Wasser kann auch in Langlochbohrungen, die in Strangpreßrichtung verlaufen, geführt werden, aber da diesfalls unterschiedliche Abstände dieser Bohrungen unterschiedliche Abkühlung des Stranges bewirkten, kam es zu Oberflächenspannungen im Strang und zu geringem Ausstoß.

Die Erfindung stellt sich die Aufgabe, eine Einrichtung der eingangs genannten Art zu schaffen, die einerseits leicht und rasch zu öffnen und zu schließen ist und die anderseits eine gleichmäßige Abkühlung des Strangpreßgutes bewirkt.

Diese Aufgabe wird einerseits erfindungsgemäß dadurch gelöst, daß zur Verriegelung von Ober- und Unterteil ein an einem dieser Teile drehbar gelagertes Schwenkstück vorgesehen ist. Dies ermöglicht vor allem ein ra-

0207064

sches Schließen der Einrichtung nach dem Einfahren des Strangpreßgutes und eine sofortige Produktionsgenauigkeit ohne Einklemmen des Strangpreßgutes, ebenso wie ein rasches Öffnen.

Diese Aufgabe wird anderseits bei einer Einrichtung der angegebenen Art, mit einer Kühleinrichtung durch ein strömendes Medium, z.B. Wasser, dadurch gelöst, daß im Ober- oder bzw. Unterteil ein schlangenlinienförmiger, quer zur Strangpreßrichtung verlaufender Strömungsweg für das Medium vorgesehen ist. In dieser Weise ergibt sich eine besonders gleichmäßige Kühlung, nämlich eine profilkonforme Querkühlung, wodurch sich Geradlinigkeit und Spannungsfreiheit des Strangpreßgutes erzielen läßt. Mit besonderem Vorteil lassen sich diese beiden erfindungswesentlichen Maßnahmen auch kombinieren.

Weitere Merkmale der Erfindung ergeben sich aus den Unteransprüchen 2 - 9 und 11 - 14. Einzelheiten und Vorteile der Erfindung ergeben sich weiterhin aus der Beschreibung zweier Ausführungsbeispiele anhand der Zeichnungen; es zeigen:

Fig. 1 eine Seitenansicht einer ersten Kalibriereinrichtung mit einfachem Drehlager in geschlossenem Zustand,

Fig. 2 diese Einrichtung in geöffnetem Zustand und

Fig. 3 einen in Strangpreßrichtung gesehenen Querschnitt durch diese Einrichtung zur Veranschaulichung des Strömungsweges für das Kühlmedium;

Fig. 4 ist eine Darstellung ähnlich Fig. 1,

Fig. 5 eine solche ähnlich Fig. 2 und

Fig. 6 die einer dazwischenliegenden Stellung, jedoch einer zweiten Kalibriereinrichtung mit einem Exzenter als Drehlager.

Bei beiden Ausführungsbeispielen handelt es sich um Kalibriereinrichtungen für Wandelemente der aus der DE-AS 22 18 557 bekannten Art, nämlich mit jeweils einer Aufhängekante, einer Begrenzungskante und einer zwischen diesen Platten verlaufenden Verbindungsplatte aus einer durch Strangpressen geformten Materialbahn.

- 3 -

0207064

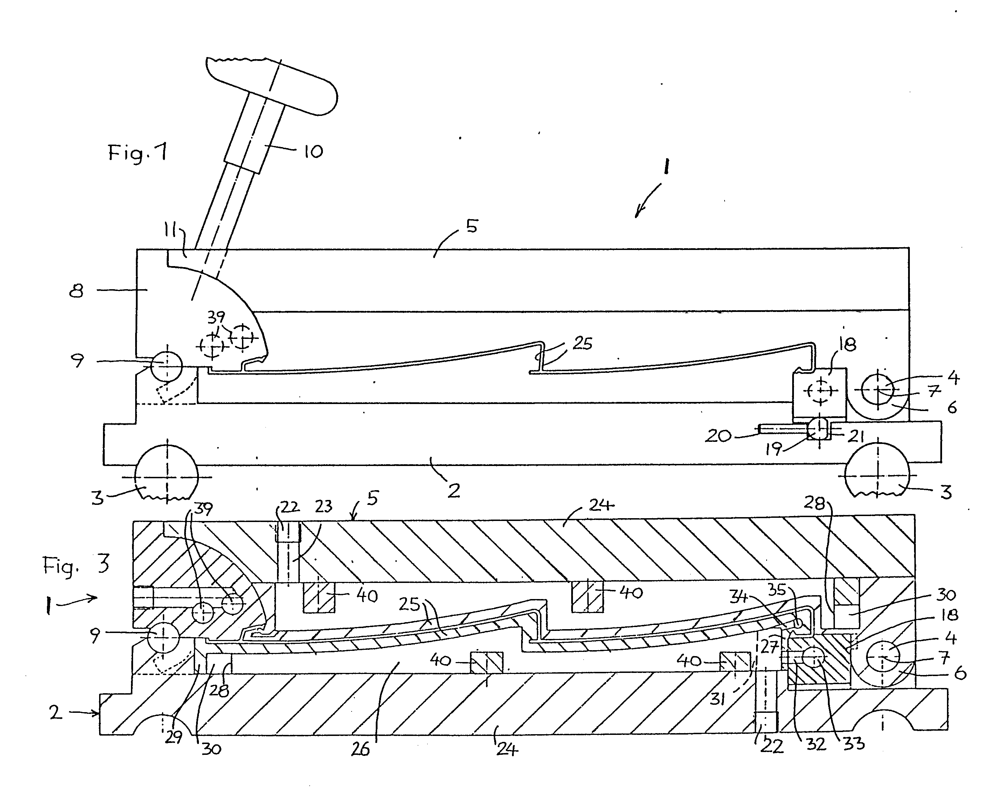

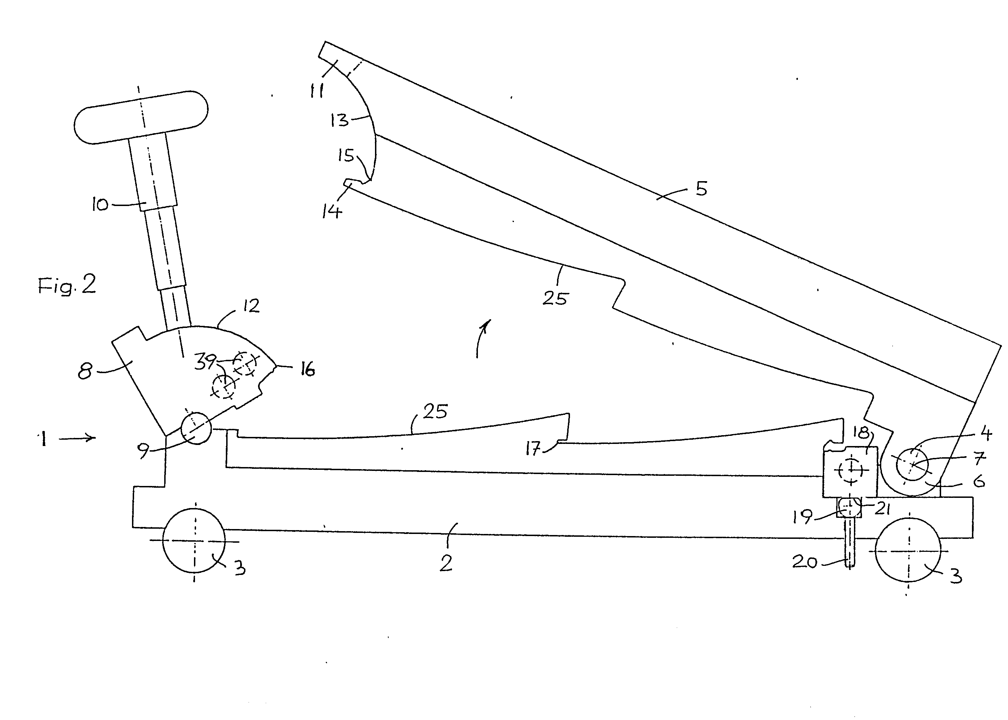

Bei dem ersten Ausführungsbeispiel nach den Fig.1 bis 3 besteht die Kalibriereinrichtung 1 aus einem Unterteil 2, der auf Tragstangen 3 gelagert ist und an seinem in den Figuren rechten Ende mit einer Drehwelle 4 versehen ist, die von am Oberteil 5 angeordneten Augen 6 umfaßt werden, dergestalt, daß ein Aufschwenken des Oberteiles um die so gebildete Drehachse 7 im Uhrzeigersinne, also der Pfeilrichtung nach Fig. 2, und damit ein rasches Öffnen und Schließen der Kalibriereinrichtung ermöglicht ist.

An dem linken Ende des Unterteiles 2 ist ein Schwenkstück 8 drehbar um die Achse 9 gelagert; dieses trägt eine Schraubspindel 10, mit deren Hilfe in der in Fig. 1 ersichtlichen Schließstellung die Kalibriereinrichtung verriegelbar wird, indem das gabelartig ausgebildete Ende 11 des Oberteiles 5 durch die Schraubspindel 10 fest gegen das Schwenkstück 8 niedergehalten wird.

Die Anordnung ist dabei so getroffen, daß die Oberseite 12 des Schwenkstückes 8 einerseits und die ihm zugeordnete, benachbarte Seitenfläche 13 des Oberteiles 5 je eine Anschlagfläche bilden, die als Teilmantelflächen von koaxialen Kreiszylindern, deren Achse die Schwenkachse 9 des Schwenkstückes 8 ist, formschlüssig aufeinanderpassen (Fig. 1).

Zwischen der Oberseite des Unterteiles 2 und der Unterseite des Oberteiles 5 ist der Durchgangsspalt für das Strangpreßgut gebildet, letzteres hier in Form eines Wandelementes der vorgenannten bekannten Art. Da dieses Wandelement an seinem in den Fig. 1 bis 3 rechten Ende mit einer umgebördelten Begrenzungskante und am linken Ende mit einer Aufhängekante versehen ist, zwischen denen sich die mittig gekröpfte Verbindungsplatte erstreckt, ergeben sich an diesen Kanten und in der Mitte Hinterschneidungen, die weitere besondere Maßnahmen bei der Ausbildung der Kalibriereinrichtung erfordern.

So wird zur Bildung der ersten Hinterschneidung für die Aufhängekante am linken unteren Ende des Ober-

0207064

teiles 5 eine vorspringende Nase 14 angeordnet, deren Ansatz 15 mit der unteren Endkante 16 der Anschlagfläche 12 in der Schließstellung nach Fig. 1 zusammenfällt (Fig. 2). In der Mitte der Verbindungsplatte ist die zweite Hinterschneidung 17 im Unterteil 2 ausgebildet, und zur Bildung der dritten Hinterschneidung für die Aufhängekante wird, unter den benachbarten Seitenflächen der Teile 2 und 5, ein Einsatzstück 18 vorgesehen, das mittels eines schraubbaren Exzenters 19 höhenverstellbar ist, um das hergestellte Profil des Wandelementes bei geöffneter Kalibriereinrichtung freizugeben. In der in Fig. 1 dargestellten Schließstellung steht der Griff 20 des Exzenters 19 horizontal, was der Stellung des Einsatzstückes für den Kalibriervorgang entspricht; zur geöffneten Stellung nach Fig. 2 dreht man den Griff 20 entgegen dem Uhrzeigersinn um 90$^{\circ}$ in die Vertikale, wodurch das Einsatzstück 18, aufruhend auf der nun oben liegenden, abgeflachten Seite 21 des Exzenters 19, abgesenkt und das Entformen des Wandelementes ermöglicht wird.

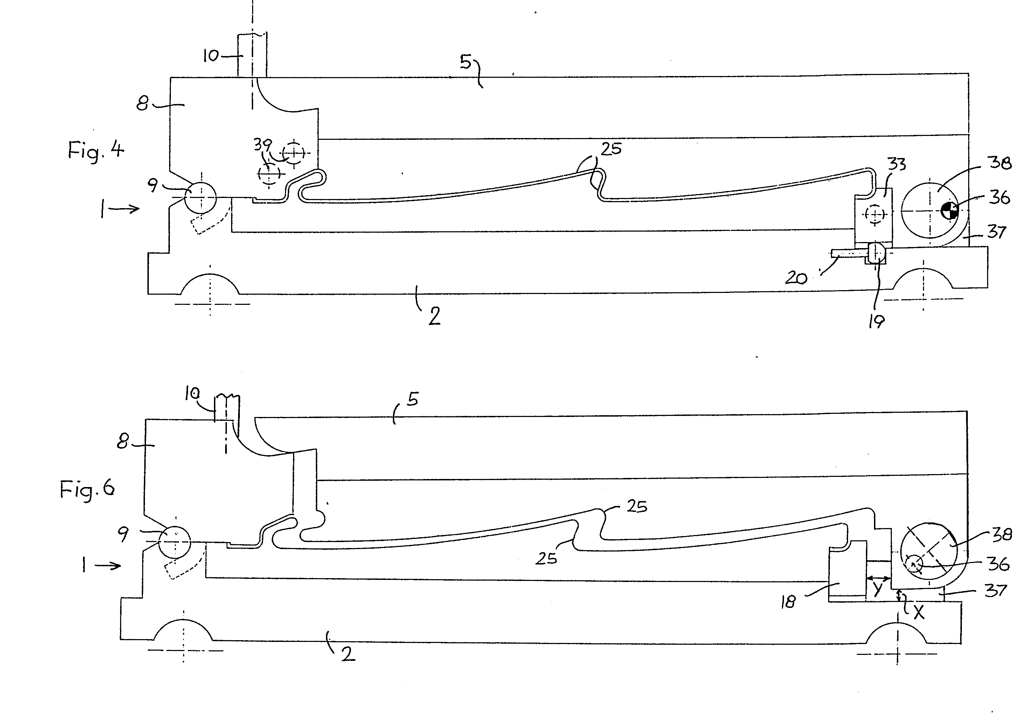

Zur Kühlung der Kalibriereinrichtung ist erfindungsgemäß weiterhin ein besonderer Strömungsweg für das Kühlmedium, z.B. Wasser, vorgesehen. Wie in Fig. 3 dargestellt, weist hiefür sowohl der Oberteil 5 als auch der Unterteil 2 einen mit einem Verschlußglied 22 sperrbaren, von einem (nicht dargestellten) Hauptzulaufrohr gespeisten Einlaß 23 auf, der jeweils von der Ober- bzw. Unterseite dieser Teile 5, 2 ausgeht und in einen Hohlraum mündet, der von der Boden- bzw. Deckplatte 24 der Teile 5, 2 und den eigentlichen, die Kontur des Wandelementes und damit den Durchgangsspalt bestimmenden Formblechen 25 begrenzt ist. Dieser Hohlraum im Unterteil 2 ist durch mehrere, quer zur Strangpreßrichtung des Wandelementes verlaufende Querwände unterteilt, von denen die erste Querwand 26 von der in Fig.3 rechten Seitenwand 27 des Formbleches 25 ausgeht und bei 28 im Abstand von der linken Seitenwand 29 des Formbleches 25 endet. Die zweite, in Strangpreßrich-

0207064

tung folgende Querwand 30 schließt umgekehrt an die linke Seitenwand 29 an und endet, in strichlierten Linien angedeutet, bei 31 im Abstand von der rechten Seitenwand 27, und so fort. In dieser Weise erhält man im Unterteil 2 unterhalb des Formbleches 25 einen schlangenlinienartigen Verlauf des Strömungsweges für das Kühlwasser. Entsprechende Querwände 26, 30 sind im Oberteil 5 vorgesehen, wobei dann am Ende dieser Strömungswege, ähnlich wie bei den Einlässen 23, entsprechende Auslässe (nicht dargestellt) vorgesehen sind.

In diesem schlangenlinienartigen Hauptströmungsweg sind noch zwei weitere Nebenströmungswege zusätzlich angeordnet, nämlich ein erster für den Einsatzteil 18, der hiefür einen Einlaß 32 und eine in Längsrichtung verlaufende Bohrung 33 sowie einen entsprechenden (nicht dargestellten) Auslaß aufweist, und ein zweiter im unteren Formblech 25 für die Hinterschneidung an der Begrenzungskante des Wandelementes, der hierfür ebenfalls einen Einlaß 34, eine Bohrung 35 und einen Auslaß aufweist.

Weitere Kühlkanäle 39 sind im Schwenkstück 8 für die Kühlung der Hinterschneidung der Aufhängekante des Wandelementes ausgebildet.

Zur Erzielung einer genau profilkonformen Kühlung sind in den Hohlräumen des Ober- und Unterteiles 5, 2 zusätzlich quer zur Strömungsrichtung liegende Stäbe 40 an den Boden- bzw. Deckplatten der Teile 2, 5 und an deren Formblechen 25 fest eingebaut, die das durchströmende Wasser zur Umspülung der Ecken bzw. Winkel der Formbleche 25 zwingen.

Die Ausführungsform der Kalibriereinrichtung nach den Fig. 4 - 6 unterscheidet sich von jener nach den Fig. 1 - 3 durch eine leicht abgeänderte Querschnittsform des Wandelementes und durch die Anordnung eines Exzenters als Drehlager zur Verbindung des Oberteiles 5 mit dem Unterteil 2 der Kalibriereinrichtung.

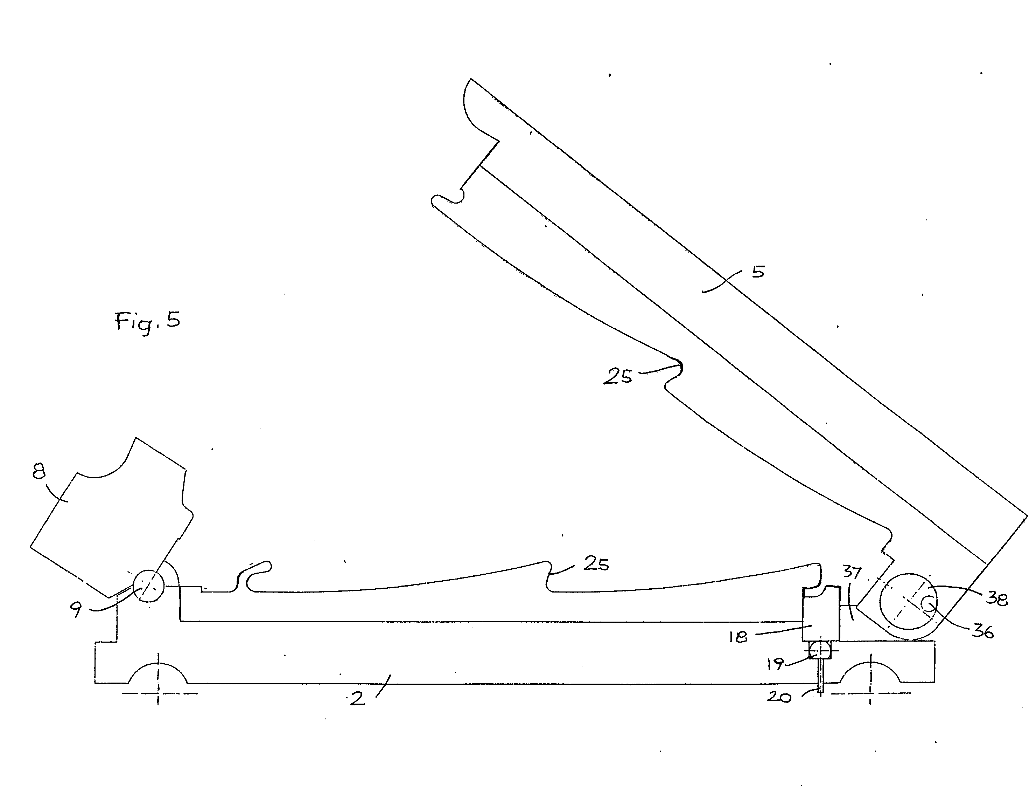

Wie aus Fig. 4 erkenntlich, ist die hinterschnittene Aufhängekante des Wandelementes durch einen schlaufenartigen Linienzug in Hakenform gebildet, und die Verbindungsplatte weist mittig als Hinterschneidung eine leichte Z-Krümmung auf. Zur Bildung der umgebördelten Begrenzungskante ist auch hier ein mit Hilfe des Schraubenexzenters 19 heb- und senkbares Einsatzstück 18 vorgesehen, dessen gehobene Stellung in Fig. 5 bei geöffneter Kalibriereinrichtung erkenntlich ist und im übrigen ähnlich zu den Fig. 1 - 3 ausgebildet ist.

Der die Teile 2, 5 verbindende Exzenter weist eine Exzenterachse 36 auf, die ortsfest an einem Lagerstück 37 des Unterteiles 2 angeordnet ist. Diese Achse 36 trägt eine Exzenterscheibe 38, an der ihrerseits drehbar der Oberteil 5 gelagert ist.

Die Anordnung ist dabei so getroffen, daß bei Verdrehung der Exzenterachse 36 und damit der Exzenterscheibe 38 im Uhrzeigersinne, ausgehend von der in Fig.4 dargestellten Schließstellung, die auch die Arbeitsstellung der Kalibriereinrichtung ist, um einen Winkel von 135° die in Fig. 6 ersichtliche Zwischenstellung der Kalibriereinrichtung erreicht wird, in welcher der Oberteil 5 gegenüber dem Unterteil um ein bestimmtes Ausmaß X gehoben und um etwa das Doppelte Y desselben nach rechts verschoben ist, dergestalt, daß in dieser Stellung der Fig. 6 zwischen den Formblechen 25 von Ober- und Unterteil 5, 2, bezogen auf die Vertikale, kein Eingriff mehr besteht, somit alle Hinterschneidungen dieser Formbleche aufgehoben sind. Dadurch kann nun der Oberteil 5 im Uhrzeigersinne (Pfeilrichtung der Fig. 5) nach oben weggeschwenkt werden, nämlich in die in Fig. 5 ersichtliche Offenstellung der Kalibriereinrichtung, in der anschließend auch noch zur vollständigen Freilegung des Formbleches 25 des Unterteiles 2 das Schwenkstück 8 im Gegenuhrzeigersinne weggeschwenkt werden kann. Zum Schließen der Kalibriereinrichtung wird sinngemäß in umgekehrter Reihenfolge vorgegangen.

Im Rahmen der Erfindung sind Abänderungen an den beschriebenen Ausführungsbeispielen möglich. Wiewohl die Kalibriereinrichtung als eine solche für die Herstel-

- 7 -

0207064

lung von Wandelementen beschrieben wurde, ist sie darauf nicht eingeschränkt, denn es kann darin auch Strangpreßgut anderer, bevorzugt jedoch plattenartiger Querschnittsformen behandelt werden. Als Werkstoff für die Herstellung von Wandelementen ist Hartpolyvinylchlorid besonders geeignet.

0207064

Patentansprüche:

1. Kalibriereinrichtung für insbesondere plattenartiges Strangpreßgut, wie Wandelemente, aus Kunststoff, mit einem Oberteil und einem damit verbindbaren Unterteil und einem dazwischen ausgebildeten Durchgangsspalt für das Strangpreßgut, wobei der Ober- und Unterteil an einer Seite durch ein Drehlager aneinander gelenkt sind, dadurch gekennzeichnet, daß zur Verriegelung von Ober- und Unterteil (5,2) ein an einem dieser Teile drehbar gelagertes Schwenkstück (8) vorgesehen ist.

2. Einrichtung nach Anspruch 1, dadurch gekennzeichnet, daß das Schwenkstück (8), dessen Drehachse (9) vorzugsweise parallel zur Achse des Drehlagers (4,6) von Ober- und Unterteil (5,2) und bzw. oder parallel zur Strangpreßrichtung liegt, mittels einer Schraubspindel (10) verriegelbar ist.

3. Einrichtung nach Anspruch 2, dadurch gekennzeichnet, daß das Schwenkstück (8) und die ihm benachbarte Seitenfläche des zu verriegelnden Teiles (5) formschlüssige Anschlagflächen (12,13) haben, gebildet durch Teilmantelflächen von koaxialen Kreiszylindern, deren Achse die Drehachse (9) des Schwenkstückes (8) ist (Fig. 1 - 3).

4. Einrichtung nach Anspruch 3, dadurch gekennzeichnet, daß am unteren Ende der Anschlagfläche (13) des zu verriegelnden Teiles eine Nase (14) vorsteht, die das Schwenkstück (8) in dessen Verriegelungslage untergreift.

5. Einrichtung nach Anspruch 4, dadurch gekennzeichnet, daß der Ansatz (15) der Nase (14) in der Schließstellung der Kalibriereinrichtung mit dem unteren Ende der Anschlagfläche (12) des Schwenkstückes (8) zusammenfällt.

6. Einrichtung nach Anspruch 1, dadurch gekennzeichnet, daß Ober- und Unterteil (5,2) durch einen Exzenter (36,38) aneinander gelenkt sind, mit dem vorzugsweise vor dem Aufklappen zunächst Ober- und Unterteil (5,2) zueinander parallel und der Höhe nach voneinander weg verschiebbar sind (Fig. 3 - 6).

0207064

7. Einrichtung nach Anspruch 6, dadurch gekennzeichnet, daß die Exzenterachse (34) ortsfest am Unterteil (2), vorzugsweise an einem Lagestück (37) desselben, angeordnet ist und die Exzenterscheibe (38) das Drehlager für den Oberteil (5) bildet.

8. Einrichtung nach einem der vorhergehenden Ansprüche, dadurch gekennzeichnet, daß zwischen Ober- und Unterteil (5,2) den Durchgangsspalt begrenzende Formbleche (25) an den Teilen (2,5) vorgesehen sind, wobei zusätzlich zur Bildung von Hinterschneidungen aufweisendem Strangpreßgut verstellbare Einsatzstücke (18) an mindestens einem der Teile (2,5) angeordnet sind.

9. Einrichtung nach Anspruch 8, dadurch gekennzeichnet, daß zur Verstellung der Einsatzstücke (18) vorzugsweise schraubbare Exzenter (19) vorgesehen sind.

10. Einrichtung, insbesondere nach Anspruch 1, mit einer Kühleinrichtung durch ein strömendes Medium, z.B. Wasser, dadurch gekennzeichnet, daß im Ober- oder bzw. und Unterteil (5,2) ein schlangenlinienförmiger, quer zur Strangpreßrichtung verlaufender Strömungsweg für das Medium vorgesehen ist (Fig. 3).

11. Einrichtung nach Anspruch 10, dadurch gekennzeichnet, daß der Strömungsweg durch Trennwände (26,30) begrenzt ist, die entlang dem Durchgangsspalt des Strangpreßgutes verlaufen.

12. Einrichtung nach Anspruch 10 oder 11, dadurch gekennzeichnet, daß zur Herstellung von Wandelementen mit Hinterschneidungen in deren Bereich die hiefür vorgesehenen Einsatzstücke (18) in den Strömungsweg durch Kühlkanäle (33) einbezogen sind.

13. Einrichtung nach einem der Ansprüche 10 bis 12, dadurch gekennzeichnet, daß die Trennwände (26,30) an den Durchgangsspalt begrenzenden Formblechen (25) und den Boden- bzw. Deckplatten (24) von Ober- und Unterteil (5,2) verankert sind.

14. Einrichtung nach einem der Ansprüche 10 bis 13, dadurch gekennzeichnet, daß im Strömungsweg quer zur Strömungsrichtung liegende Stäbe (39) angeordnet sind, vorzugsweise an den Formblechen (25) und bzw. oder den Boden- bzw. Deckplatten (24) von Ober- und Unterteil (5,2) festgelegt.

15. Einrichtung nach einem der Ansprüche 10 bis 14, dadurch gekennzeichnet, daß auch im Schwenkstück (8) Kühlkanäle (40) ausgebildet sind.

Fig. 1

Fig. 3

Fig. 2

0207064

Fig. 4

Fig. 6

Fig. 5